# FASCICULE DE BREVET EUROPEEN

(11) **EP 0 922 596 B1**
(45) Date de publication et mention de la délivrance du brevet: **10.12.2003**
(21) Numéro de dépôt: 98402585.8
(22) Date de dépôt: 19.10.1998
(51) Int. Cl.: B60J 5/04, B60J 10/08, B60J 10/04

(54) **Nouveau cadre de porte d'un véhicule automobile et son procédé de fabrication**
Neue Kraftfahrzeugtürrahmen und Herstellungsverfahren
New door frame for a motor vehicle and method of manufacturing

(30) Priorité: 09.12.1997 FR 9715544
(43) Date de publication de la demande: 16.06.1999
(73) Titulaire: Metzeler Automotive Profile Systems Transieres, 92000 Nanterre (FR)
(72) Inventeur: Dron, Bernard, 92800 Puteaux (FR)
(74) Mandataire: Jolly, Jean-Pierre

(56) Documents cités:
- EP-A- 0 146 186
- EP-A- 0 780 255
- DE-A- 4 240 365
- PATENT ABSTRACTS OF JAPAN vol. 018, no. 041 (M-1546), 21 janvier 1994 & JP 05 270265 A (MAZDA MOTOR CORP), 19 octobre 1993

## Description

La présente invention concerne un cadre de porte d'un véhicule automobile, équipé d'organes intégrés d'étanchéité, ainsi que de guidage et d'étanchéité d'une vitre mobile équipant cette porte. L'invention concerne également un procédé de fabrication d'un tel cadre de porte.

Les portes des véhicules automobiles sont constitués d'un caisson de porte et d'un cadre métallique rigidement solidaire de ce caisson, au dessus duquel il fait saillie, en prolongeant ses bords latéraux. Ce cadre est habituellement équipé de profilés rapportés, en un matériau thermoplastique ou élastomère, assurant respectivement l'étanchéité à la périphérie de la porte et le guidage et l'étanchéité d'une vitre mobile de cette porte, apte à s'escamoter à l'intérieur du caisson de porte. Ce cadre peut assurer aussi, éventuellement, le maintien en position d'une vitre auxiliaire fixe, conjointement avec un montant auxiliaire, parfois désigné dans la technique par son appellation anglaise de "division bar", ou encore appelé "dormant" ou "montant de vitre fixe".

Les cadres de porte sont habituellement réalisés par profilage ou assemblage de profilés métalliques, et ils sont mis en forme, par galbage et cintrage, avec éventuellement soudure dans les angles d'éléments distincts du cadre. Ce n'est que dans un second temps que ces cadres sont équipés des profilés extrudés mentionnés ci-dessus, en matière plastique ou en élastomère.

Il est pourtant bien connu, dans la technique, d'extruder des profilés de formes variées en une ou plusieurs matières thermoplastiques ou en élastomères directement sur des éléments métalliques, en particulier sur des armatures ou sur des montants de vitres fixes, et l'on pourrait envisager de transposer un tel procédé aux éléments métalliques destinés à la réalisation des cadres de portes, à condition, bien entendu, que ces éléments présentent une rigidité et une résistance mécanique suffisantes.

Ce n'est malheureusement pas le cas et, à la connaissance de la Demanderesse, il n'a pas été possible, à ce jour, de réaliser de cette manière des cadres complets de portes de véhicules automobiles, équipés d'organes intégrés d'étanchéité et de guidage d'une vitre.

La présente invention vise à remédier à cet inconvénient et à appliquer la technique rappelée ci-dessus à des profilés métalliques dont la forme est telle qu'avant d'être munis, par extrusion à leur surface, des profilés d'étanchéité de la périphérie de la porte et de guidage de la vitre mobile de celle-ci, ils puissent être équipés d'organes de renfort aptes à leur conférer la rigidité désirée.

A cet effet, l'invention a pour objet un cadre de porte d'un véhicule automobile comprenant un ou des montants métalliques équipés d'un profilé d'étanchéité de la périphérie du cadre et d'un profilé du type dit "coulisse" pour le guidage et l'étanchéité d'une glace coulissante de cette porte, ce ou ces montants étant venus de profilage et convenablement galbés et cintrés, tandis que les profilés sont réalisés par extrusion, à la surface de ce ou ces montants, d'au moins une matière thermoplastique et/ou d'au moins un élastomère, ce cadre de porte étant caractérisé en ce que le ou les montants présentent, suivant leur longueur, au moins une portion évidée, dans laquelle est logé au moins un organe de renfort, qui y est maintenu prisonnier par une partie formant cloison de l'un des profilés associés.

Ces éléments de renfort équiperont avantageusement les parties du ou des montants du cadre destinées à occuper une position verticale ou faiblement inclinée sur la verticale, jusqu'à l'emplacement de leur fixation dans le caisson de porte.

Lorsque le cadre de porte comprend des montants métalliques raccordés entre eux par soudure dans au moins un angle du cadre, des éléments de renfort seront également prévus dans les parties de ces montants disposées en position contiguë dans cet angle.

Le ou les montants dont est constitué le cadre de porte pourront avoir toute forme permettant d'y loger un ou des éléments de renfort dans au moins un évidement longitudinal prévu à cet effet. Ce ou ces montants pourront avoir, par exemple, une section transversale en forme de H, de h, de U, ou de deux U de forme et/ou de dimensions différentes, solidaires par leurs bases et tournés en sens inverse l'un de l'autre, et comporter éventuellement un renflement latéral.

Les éléments de renfort pourront être massifs ou creux et ils pourront être mis en place dans les évidements des montants avant ou après galbage de ceux-ci, après avoir été eux-mêmes préalablement galbés au profil désiré.

Dans une forme de mise en oeuvre avantageuse de l'invention, qui sera décrite ci-après plus en détail, le profilé d'étanchéité du cadre de porte et le profilé de guidage de la vitre mobile forment un même et unique profilé gainant l'armature métallique du cadre et le ou les éléments de renfort.

L'invention a également pour objet un procédé de fabrication d'un cadre de porte d'un véhicule automobile, comprenant le profilage, le galbage et le cintrage d'au moins un montant métallique et la mise en place sur ce montant, par extrusion directe d'au moins une matière thermoplastique et/ou d'au moins un élastomère, d'un profilé d'étanchéité de la périphérie de la porte et/ou d'un profilé de guidage et d'étanchéité d'une vitre mobile destinée à être montée coulissante par rapport au cadre, ce procédé étant caractérisé en ce que, préalablement ou non à l'extrusion du ou des profilés, on loge au moins un élément de renfort dans une partie évidée du ou des montants, les parties évidées et les éléments de renfort ayant une forme et des dimensions telles qu'après extrusion du ou des profilés, le ou les éléments de renfort soient maintenus prisonniers dans leur logement par une partie formant cloison de ce ou de ces profilés.

L'invention a enfin pour objet un ensemble modulaire apte à être fixé tel quel dans un caisson de porte et constitué par une vitre coulissante d'automobile et un cadre de porte tel que défini ci-dessus, dont un profilé ou une partie de profilé formant coulisse coiffe les bords de la vitre.

D'autres caractéristiques et avantages de l'invention apparaîtront ci-après dans la description détaillée qui va suivre d'une forme de réalisation d'un cadre conforme à l'invention. Dans cette description, on se réfèrera aux dessins schématiques annexés, qui n'ont pas de caractère limitatif et sur lesquels :
la figure 1 est une vue en élévation du cadre de porte, équipé d'une glace coulissante ;
les figures 2, 3 et 4 sont des coupes transversales suivant les figures II-II, III-III, IV-IV de la figure 1 ;
les figures 5 et 6 sont des vues analogues, respectivement, à la figure 2 et à la figure 3, illustrant deux variantes de mise en oeuvre de l'invention.
La figure 7 est une vue analogue à la figure 6 d'une autre forme de réalisation.

Sur toutes les figures, les organes analogues sont désignés par les mêmes chiffres de référence.

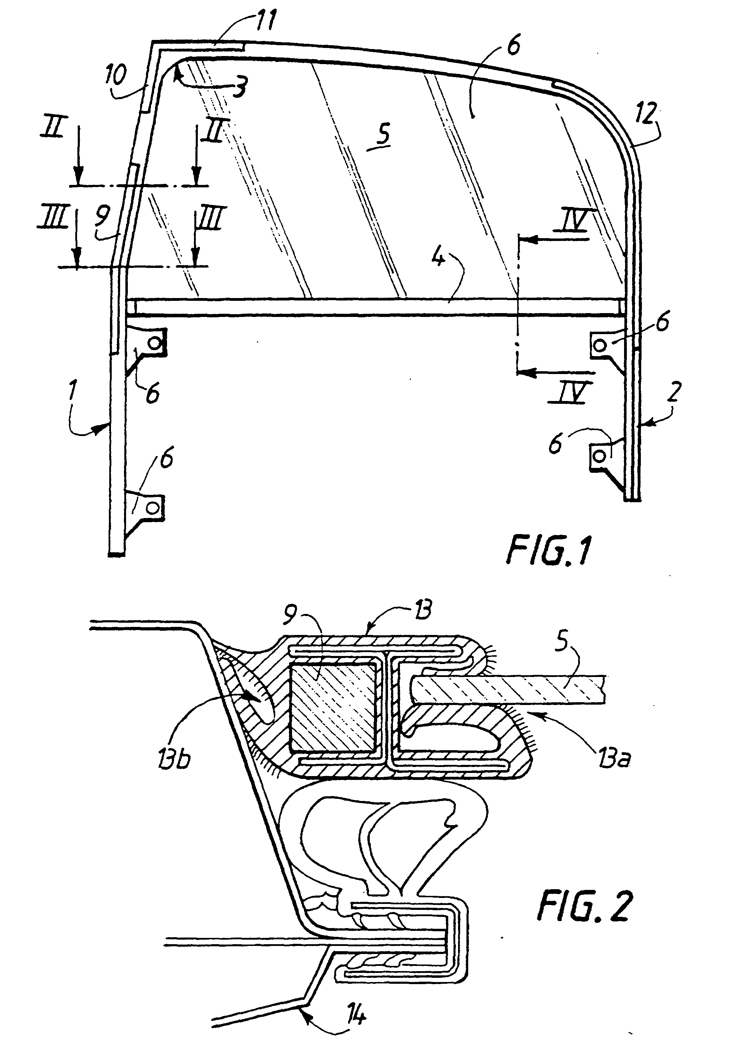

Le cadre de porte d'automobile représenté sur la figure 1 est d'un type général usuel. Il comprend deux montants métalliques latéraux, l'un, 1, sensiblement vertical et l'autre, 2, incurvé en direction du premier, dont il est rigidement solidaire par soudure dans une portion d'angle 3. Les montants 1 et 2 sont réunis par une ou plusieurs poutres transversales. Comme représenté, l'une de ces poutres peut être constituée par un lécheur 4. Une autre poutre (non représentée), plus rigide et placée plus bas que le lécheur 4, peut servir d'élément de renfort et être fixée aux montants 1 et 2. L'espace limité par ces poutres et la partie supérieure des montants 1 et 2 est destiné à être occupé par une vitre mobile 5, apte à s'escamoter dans le caisson de porte, sous la sollicitation de moyens moteurs, étrangers à la présente invention. Les parties des montants 1 et 2 disposés au-dessous de la poutre 4 sont sensiblement parallèles entre elles et comportent des pattes de fixation 6, destinées à être rendues solidaires des panneaux du caisson de porte (non représentés sur la figure 1).

Conformément à l'invention, les montants 1 et 2 comportent des évidements longitudinaux aptes à recevoir, en des emplacements prédéterminés du cadre de porte, des éléments métalliques de renfort, destinés à conférer aux montants 1 et 2, avant ou après qu'ils aient été mis en forme par galbage et cintrage, une rigidité et une résistance mécanique satisfaisante, de façon à pouvoir extruder ensuite directement sur les montants les profilés en matériau thermoplastique ou en élastomère destinés à assurer l'étanchéité périphérique de la porte, ainsi que le guidage et l'étanchéité de la vitre 5.

Alternativement, on peut extruder d'abord les profilés sur les montants 1 et 2, en réservant des évidements servant de logement pour les éléments de renfort, qui sont ensuite mis en place dans ces évidements, avant ou après galbage, par une extrémité de ceux-ci ou par un orifice prévu à cet effet.

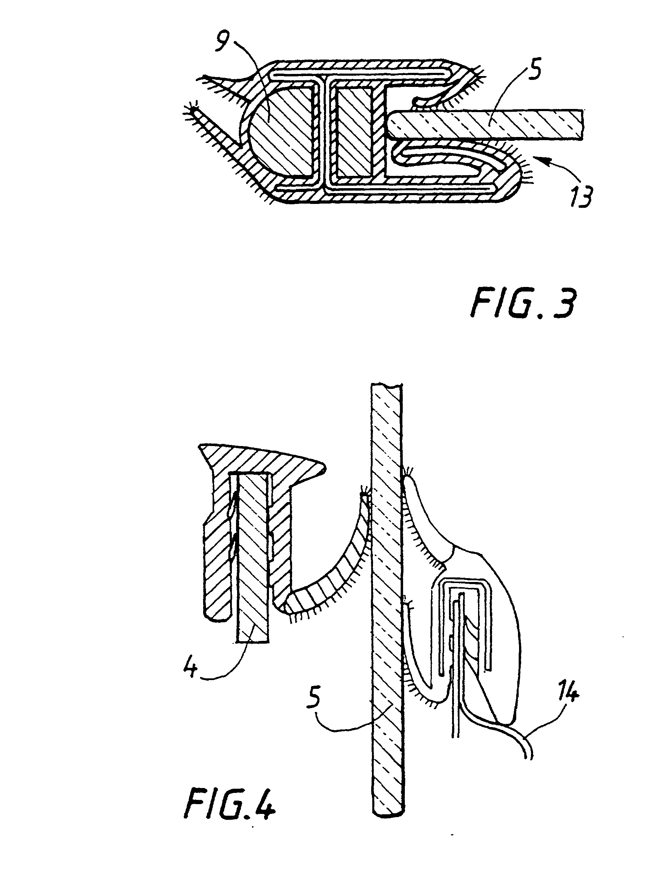

Dans la réalisation illustrée par les dessins, les montants 1 et 2 sont constitués de deux poutrelles 7, 8, en forme de U, les deux U étant tournés en sens inverse l'un de l'autre et assemblés par leurs bases. Comme on le voit sur les figures 2, 3, 5 et 6, les espaces entre les branches des deux U forment ainsi des logements pour des éléments de renfort longitudinaux tels que 9, 10, 11 et 12, de section appropriée, pleins ou creux.

Les éléments de renfort sont introduits dans leurs logements avant ou après galbage et cintrage des montants 1 et 2 et ils ont un profil et une section adaptés à ces logements.

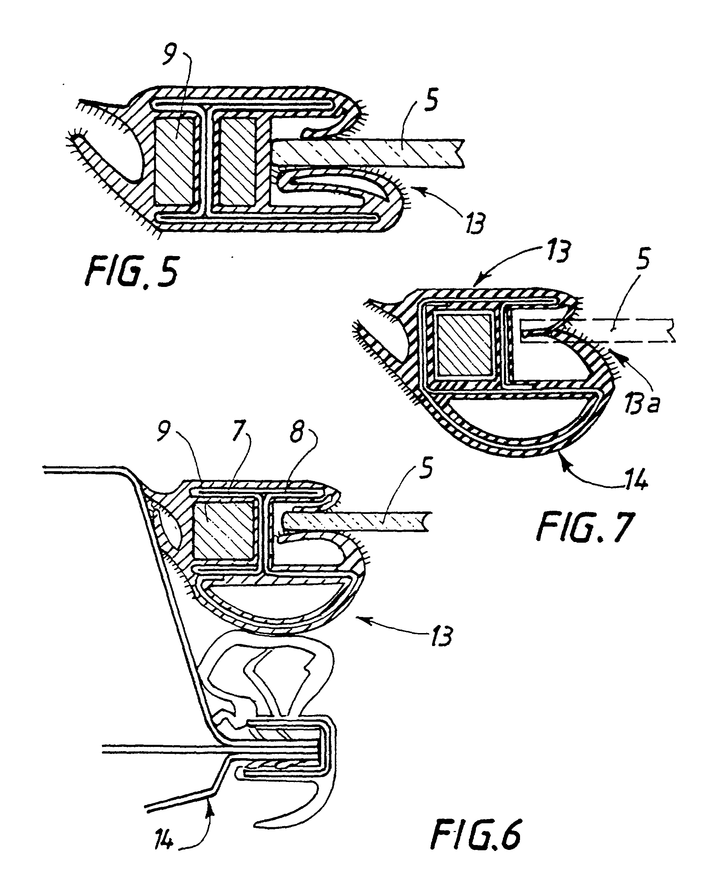

Ils peuvent être disposés dans un seul des deux logements définis par les poutrelles à section en U, 7 et 8, (voir figure 2) ou dans les deux logements (voir figure 5). Dans ce dernier cas, les renforts disposés dans ces logements pourront avoir des longueurs identiques ou différentes.

Les montants 1 et 2 peuvent naturellement avoir une section de forme différente de celle qui a été représentée.

Les éléments de renfort peuvent être disposés suivant toute la longueur des montants 1 et 2. De préférence, toutefois, afin de ne pas alourdir le cadre, ils seront disposés simplement dans les emplacements où les montants 1 et 2 présentent une rigidité ou une résistance mécanique insuffisante. Comme représenté sur la figure 1, ces renforts pourront ainsi être disposés suivant la partie médiane des montants 1 et 2, de part et d'autre de la poutre 4, ainsi que dans la portion d'angle 3 du cadre, où ils seront mis en place avant soudure des montants 1 et 2, préalablement cintrés et galbés.

Ces éléments de renfort peuvent avoir une section sensiblement identique suivant toute leur longueur ou une section variable (renfort à profil évolutif).

Conformément à l'invention, avant ou après mise en place des renforts dans leurs logements, les profilés devant équiper le cadre de porte sont directement extrudés sur celui-ci et non rapportés après une phase de fabrication séparée par extrusion, comme il est usuel dans la technique.

Comme on le voit sur les dessins, le profilé d'étanchéité périphérique de la porte et le profilé de guidage de la vitre 6 peuvent alors former un seul et unique profilé 13, dont une partie 13a à section en U forme coulisse pour la vitre mobile 6, et dont une autre partie 13b assure l'étanchéité à la périphérie de la porte, les parties 13a et 13b pouvant être équipées de lèvres appropriées, comme il est bien connu dans la technique. La forme des profilés 13 peut être absolument quelconque et ils peuvent eux aussi avoir un profilé évolutif.

Comme on le voit sur les figures 2 à 6, des cloisons transversales du profilé 13 maintiennent les éléments de renforts prisonniers dans leurs logements des montants.

Sur certaines des figures 2 à 6, pour plus de clarté, la carrosserie 14 et les profilés d'étanchéité d'un type usuel dont il est équipé ont été esquissés schématiquement.

Dans les formes de réalisation des figures 6 et 7, les montants peuvent comporter une partie latérale renflée 14 et être constitués d'une unique tôle judicieusement repliée sur elle-même pour obtenir le profil désiré, avec certaines parties d'épaisseur double (voir figure 7), pour accroître la rigidité et la résistance mécanique des montants.

Comme représenté sur la figure 1, le cadre de porte ainsi réalisé peut être équipé de la vitre mobile destinée à la porte du véhicule et un tel ensemble modulaire peut être livré tel quel aux fabricants d'automobiles. Cet ensemble modulaire constitue un autre objet de la présente invention.

## Revendications

1. Cadre de porte d'un véhicule automobile comprenant un ou des montants métalliques (1, 2) équipés d'un profilé d'étanchéité de la périphérie du cadre et d'un profilé du type dit "coulisse" pour le guidage et l'étanchéité d'une glace coulissante (5) de cette porte, ce ou ces montants (1, 2) étant venus de profilage et convenablement galbés et cintrés, tandis que les profilés sont réalisés par extrusion, à la surface de ces montants, d'au moins une matière thermoplastique extrudée et/ou d'au moins un élastomère, ce cadre de porte étant **caractérisé en ce que** le ou les montants (1, 2) présentent, suivant leur longueur, au moins une portion évidée, dans laquelle est logé au moins un organe de renfort (9, 10, 11, 12), qui y est maintenu prisonnier par une partie formant cloison de l'un des profilés associés.

2. Cadre de porte selon la revendication 1, **caractérisé en ce que** les éléments de renfort n'équipent qu'une partie de la longueur du ou des montants (1, 2), notamment la partie médiane de ceux-ci et, éventuellement, une partie d'angle dans laquelle les montants sont raccordés par soudure.

3. Cadre de porte selon l'une des revendications 1 et 2, **caractérisé en ce que** le ou les montants (1, 2) ont une section transversale en forme de H, de h, de U ou de deux U (7, 8) solidaires par leurs bases et tournés en sens inverse l'un de l'autre, et comportent éventuellement un renflement latéral (14).

4. Cadre de porte selon l'une des revendications 1 à 3, **caractérisé en ce que** le profilé d'étanchéité périphérique de la porte et le profilé dit "coulisse" de guidage et d'étanchéité de la vitre mobile forment un même et unique profilé (13) gainant les montants (1, 2) de l'armature métallique.

5. Procédé de fabrication d'un cadre de porte d'un véhicule automobile, comprenant le profilage, le galbage et le cintrage d'au moins un montant métallique (1, 2) et la mise en place sur ce montant, par extrusion directe d'au moins une matière thermoplastique et/ou d'au moins un élastomère, d'un profilé d'étanchéité de la périphérie de la porte et/ou d'un profilé de guidage et d'étanchéité d'une vitre mobile (5) destinée à être montée coulissante par rapport au cadre, ce procédé étant **caractérisé en ce que**, préalablement ou non à l'extrusion du ou des profilés, on loge au moins un élément de renfort (9, 10, 11, 12) dans une partie évidée du ou des montants (1, 2), les parties évidées et les éléments de renfort ayant une forme et des dimensions telles qu'après extrusion du ou des profilés, le ou les élémen ts de renfort (9, 10, 11, 12) sont maintenus prisonniers dans leur logement par une partie formant cloison de ce ou ces profilés.

6. Procédé selon la revendication 5, **caractérisé en ce qu'**avant ou après mise en place du ou des éléments de renfort (9, 10, 11, 12) dans leurs logements, on extrude sur le montant (1, 2) un unique profilé (13), qui gaine le montant et assure à la fois l'étanchéité périphérique de la porte et le guidage et l'étanchéité de la vitre mobile (5).

7. Ensemble modulaire constitué par une vitre (5) d'automobile et un cadre de porte selon l'une des revendications 1 à 4, dont un profilé ou une partie (13a) de profilé formant coulisse coiffe les bords de la vitre.

## Patentansprüche

1. Türrahmen für ein Kraftfahrzeug, umfassend eine oder mehrere metallische Säulen (1, 2), die mit einem Dichtungsprofil für den Umfang des Rahmens und mit einem Profil in der Art einer sogenannten "Führung" zum Führen und Abdichten eines Schiebefensters (5) dieser Tür versehen ist oder sind, wobei diese Säule oder Säulen (1, 2) durch Profilieren hergestellt wird oder werden und entsprechend gewölbt und gebogen ist oder sind, wohingegen die Profile an der Oberfläche dieser Säulen durch Extrusion zumindest eines extrudierten thermoplastischen Materials und/oder eines Elastomers realisiert sind, **dadurch gekennzeichnet, dass** die Säule oder Säulen (1, 2) entlang ihrer Länge zumindest einen ausgesparten Bereich aufweisen, in welchem zumindest ein Verstärkungselement (9, 10, 11, 12) gelagert ist, das dort durch einen Teil, der eine Trennwand eines der verbundenen Profile bildet, festgehalten wird,

2. Türrahmen nach Anspruch 1, **dadurch gekennzeichnet, dass** die Verstärkungselemente nur einen Teil der Länge der Säule oder Säulen (1, 2) belegen, insbesondere den mittleren Bereich derselben und eventuell einen Winkelbereich, in dem die Säulen miteinander verschweißt sind.

3. Türrahmen nach einem der Ansprüche 1 und 2, **dadurch gekennzeichnet, dass** der Querschnitt der Säule oder Säulen (1, 2) eine H-, h, U- oder Doppel-U-Form (7, 8) hat, wobei die beiden U an ihrer Basis fest miteinander verbunden sind, voneinander abgekehrt sind und eventuell eine seitliche Ausbauchung (14) aufweisen.

4. Türrahmen nach einem der Ansprüche 1 bis 3, **dadurch gekennzeichnet, dass** das umfangsseitige Dichtungsprofil der Tür und das sogenannte "Führungs"-Profil zum Führen und Abdichten der mobilen Fensterscheibe dasselbe und einzige Profil (13) bilden, welches die Säulen (1, 2) des metallischen Körpers ummantelt.

5. Verfahren zur Herstellung eines Türrahmens für ein Kraftfahrzeug, umfassend das Profilieren, Wölben und Biegen von zumindest einer metallischen Säule (1, 2) und das Anbringen eines umfangsseitigen Dichtungsprofils der Tür und/oder eines Führungs- und Dichtungsprofils für eine bezogen auf den Rahmen gleitbeweglich zu lagernde bewegbare Fensterscheibe (5) an dieser Säule durch direktes Extrudieren von wenigstens einem thermoplastischen Material und/oder wenigstens einem Elastomer, **dadurch gekennzeichnet, dass** beim Extrudieren des Profils oder der Profile im voraus oder nicht im voraus zumindest ein Verstärkungselement (9, 10, 11, 12) in einem ausgesparten Bereich der Säule oder Säulen (1, 2) angeordnet wird, wobei die ausgesparten Bereiche und die Verstärkungselemente eine solche Form und solche Abmessungen haben, dass das Verstärkungselement oder die Verstärkungselemente (9, 10, 11, 12) nach dem Extrudieren des Profils oder der Profile durch einen Teil, der eine Tennwand dieses Profils oder dieser Profile bildet, in ihrem Aufnahmeraum festgehalten werden.

6. Verfahren nach Anspruch 5, **dadurch gekennzeichnet, dass** vor oder nach der Anordnung des Verstärkungselements oder der Verstärkungselemente (9, 10, 11, 12) in ihren Aufnahmeräumen ein einziges Profil (13) an der Säule (1, 2) extrudiertwird, das die Säule ummantelt und zugleich die umfangsseitige Abdichtung der Tür und die Führung und Abdichtung der bewegbaren Fensterscheibe (5) sicherstellt.

7. Modulsystem, gebildet aus einer Fensterscheibe (5) eines Kraftfahrzeugs und aus einem Türrahmen nach einem der Ansprüche 1 bis 4, wovon ein Profil oder ein eine Führung bildender Teil (13a) des Profils die Ränder der Fensterscheibe bedeckt.

## Claims

1. Motor vehicle door frame comprising one or more metal uprights (1, 2) equipped with a profiled sealing section for sealing the periphery of the frame and with a profiled section of the "slideway" type for guiding and sealing a drop glass (5) of this door, this or these uprights (1, 2) being formed by shaping and suitably curved and bent, while the profiled sections are produced by extruding, onto the surface of these uprights, at least one extruded thermoplastic and/or at least one elastomer, this door frame being **characterized in that** the upright or uprights (1, 2) have, along their length, at least one hollowed portion in which there is housed at least one reinforcing member (9, 10, 11, 12) which is held captive therein by a partition-forming part of one of the associated profiled sections.

2. Door frame according to Claim 1, **characterized in that** the reinforcing elements equip just part of the length of the upright or uprights (1, 2), particularly the central part thereof and, possibly, a corner part where the uprights are connected by welding.

3. Door frame according to one of Claims 1 and 2, **characterized in that** the upright or uprights (1, 2) have a cross section in the shape of an H, h, U or two U's (7, 8) secured by their bases and facing in opposite directions from one another, possibly with a lateral bulge (14).

4. Door frame according to one of Claims 1 to 3, **characterized in that** the profiled sealing section for peripherally sealing the door and the "slideway" profiled section for guiding and sealing the moving window form one and the same profiled section (13) lining the uprights (1, 2) of the metal framework.

5. Method of manufacturing a motor vehicle door frame involving shaping, curving and bending at least one metal upright (1, 2) and installing on this upright, by direct extrusion of at least one thermoplastic and/or at least one elastomer, a profiled sealing section for sealing the periphery of the door and/or a profiled section for guiding and sealing a moving window (5) intended to be mounted to slide with respect to the frame, this method being **characterized in that**, prior or not prior to the extruding of the profiled section or sections, at least one reinforcing element (9, 10, 11, 12) is lodged in a hollow part of the upright or uprights (1, 2), the hollowed parts and the reinforcing elements having a shape and dimensions which are such that after the profiled section or sections have been extruded, the reinforcing element or elements (9, 10, 11, 12) are held captive in their housing by a partition-forming part of this or these profiled sections.

6. Method according to Claim 5, **characterized in that** before or after installing the reinforcing element or elements (9, 10, 11, 12) in their housings, there is extruded onto the upright (1, 2) a single profiled section (13) which lines the upright and provides both peripheral sealing of the door and guidance and sealing for the moving window (5).

7. Modular assembly consisting of a motor vehicle window (5) and of a door frame according to one of Claims 1 to 4, in which a profiled section or a part (13a) of a profiled section forming a slideway covers the edges of the window.
